# FASCICULE DE BREVET EUROPEEN

(11) **EP 1 283 760 B1**
(45) Date de publication et mention de la délivrance du brevet: **21.07.2004**
(21) Numéro de dépôt: 01936502.2
(22) Date de dépôt: 14.05.2001
(51) Int. Cl.: B23Q 3/08

(54) **STRUCTURE D'ETAU POUR LE POSITIONNEMENT ET LE MAINTIEN DE PIECES EN VUE DE LEUR USINAGE**
STRUKTUR EINER SPANNVORRICHTUNG ZUM POSITIONIEREN UND SPANNEN EINES STÜCKES ZUR BEARBEITUNG
VISE STRUCTURE FOR POSITIONING AND MAINTAINING PARTS TO BE MACHINED

(30) Priorité: 15.05.2000 FR 0006184
(43) Date de publication de la demande: 19.02.2003
(73) Titulaire: Centre d'Ingénierie de Recherche et de Transfert de l' Esstin, 88100 Saint-Dié (FR)
(72) Inventeur: BARLIER, Claude, F-88100 Coinches (FR); WADSWORTH, Alain, F-88520 Ban De Laveline (FR)
(74) Mandataire: Poupon, Michel
(86) Numéro de dépôt international: PCT/FR2001/001444
(87) Numéro de publication internationale: WO 2001/087538

(56) Documents cités:
- EP-A- 0 811 457
- FR-A- 2 233 137
- US-A- 3 790 152

## Description

La présente invention a pour objet une nouvelle structure d'étau pour le positionnement et le maintien de pièces devant être maintenues en position par exemple pour une opération d'usinage, en particulier mais non limitativement une opération de microfraisage dans le cadre d'un procédé de prototypage rapide. (Voir, par exemple, US-3 790 152-A).

On devra comprendre que l'invention n'est pas limitée à cette stricte application mais que, bien au contraire, elle peut être mise en oeuvre dans tout procédé d'usinage mécanique, laser, à jet d'eau etc ... impliquant le maintien temporaire en position de la pièce à usiner, de manière non destructive.

Par extension elle peut être mise en oeuvre pour tout maintien réversible en position, utilisable dans un procédé de fabrication ou d'assemblage.

De manière générale, on fera référence dans le contexte de la présente demande, au procédé de prototypage rapide connu sous le nom de STRATOCONCEPTION (marque déposée) faisant l'objet en particulier du brevet européen EP 0585 502-B1 dont est titulaire le déposant de la présente demande.

Il sera également fait référence aux demandes de brevets français 98 14687 et 98 14688 dont est également titulaire le déposant de la présente demande.

On rappellera que le procédé général de STRATOCONCEPTION consiste en un procédé de réalisation de pièces mécaniques et objets en particulier de prototypes à partir d'une conception assistée par ordinateur spécifique du type comportant les phases successives de :
- Décomposition virtuelle en strates élémentaires ; mise en panoplie ;
- fabrication des pièces en couches ou strates élémentaires ;
- reconstitution de l'ensemble des couches ;
- assemblage des couches
lesdites strates étant issues d'une décomposition préalable de la pièce selon des plans et un ou des pas déterminés.

Le principe de base consiste à décomposer le volume à reproduire sous forme de prototype en une multitudes de strates, réalisées par usinage, par exemple micro-fraisage rapide d'un matériau en plaque, ledit matériau pouvant être, par exemple, en bois, en composite, en matière plastique ou métallique.

Le maintien de la strate à usiner peut être réalisé de plusieurs manières.

Ainsi on a proposé et mis en oeuvre des moyens mécaniques par dépression ou encore par gel d'une mince couche d'eau ou par bande collante.

Si dans la plupart des cas ces moyens donnent satisfaction, ils ne sont pas réellement universels en particulier pour des pièces fines et/ou ajourées. Dans le cadre d'un maintien mécanique il est en outre nécessaire d'opérer des manutentions préjudiciables à l'économie du procédé.

Par ailleurs, le procédé dans sa mise en oeuvre actuelle implique l'utilisation de matériaux consommables coûteux.

De plus, lors de certaines opérations d'usinage, on rencontre des problèmes liés aux surépaisseurs de la matière de maintien.

Enfin, le problème du nettoyage des pièces n'est pas résolu de manière satisfaisante.

Le besoin existe donc d'un dispositif d'étau ne présentant pas les inconvénients des dispositifs de l'art antérieur.

Conformément à l'invention définie par la revendication 1, ce résultat est obtenu avec une nouvelle structure d'étau pour le maintien de pièces devant subir une opération de microfraisage dans le cadre d'un procédé de prototypage rapide caractérisé en ce qu'il consiste en un plateau de fixation muni de réservations adéquatement réparties dans lesquelles est disposé un matériau thermofusible pouvant être amené de manière réversible de l'état liquide à l'état solide dont la surface libre peut venir en continuité de la surface dudit plateau, celui-ci comportant des moyens de réchauffage/refroidissement dudit matériau thermofusible permettant de libérer/bloquer la pièce disposée sur ledit plateau.

On comprendra mieux l'invention à l'aide de la description faite ci-après en référence aux dessins annexés dans lesquels:
- la figure 1 est une vue en coupe schématique d'un plateau de fixation conforme à l'invention, en position de repos,
- la figure 2 est une vue en coupe schématique d'un plateau de fixation conforme à l'invention dans la phase de positionnement de la plaque à usiner,
- la figure 3 est une vue en coupe schématique d'un plateau de fixation conforme à l'invention, en position de blocage en position de la plaque à usiner,
- la figure 4 est une vue en coupe schématique d'un plateau de fixation conforme à l'invention, en position de maintien en position de la plaque par actionnement de l'étau,
- la figure 5 est une vue en coupe schématique d'un plateau de fixation conforme à l'invention en position d'usinage de la strate bloquée sur l'étau.
- La figure 6 illustre une variante de mise en oeuvre du dispositif de la figure 5, avec reprise de la plaque usinée comportant des zones traversantes.

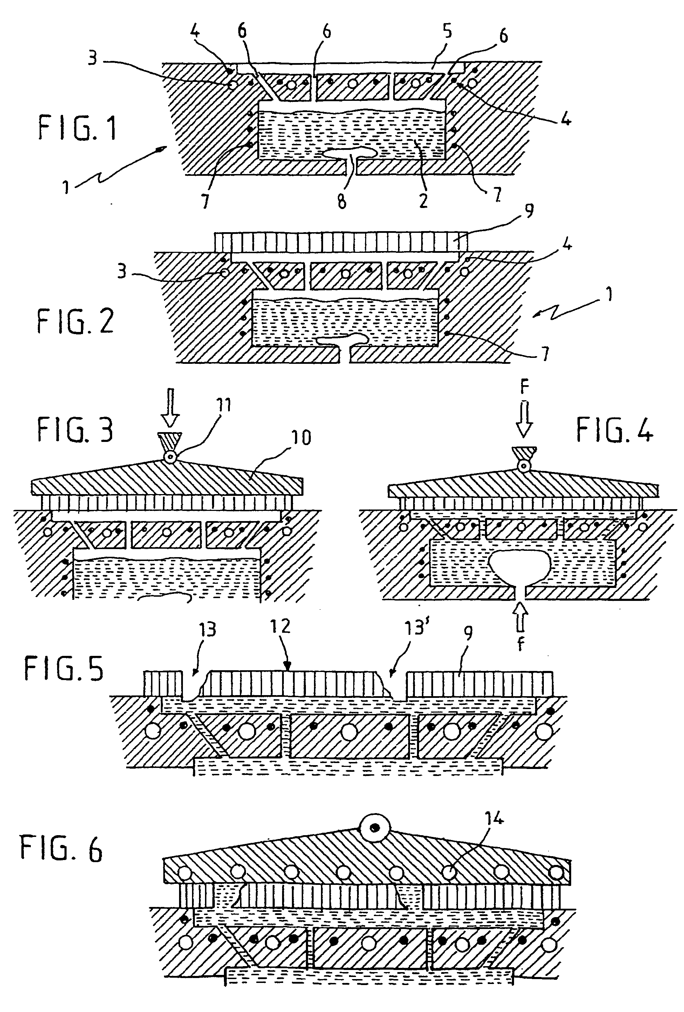

On fera référence tout d'abord à la figure 1.

Le dispositif de plateau-étau généralement référencé (1) conforme à l'invention comporte essentiellement :
- une cuve (2) de matériau fusible
- un circuit de refroidissement (3)
- un réseau de résistances chauffantes (4)
- une réservation supérieure ouverte (5) destinée à recevoir du matériau fusible en provenance de la cuve (2) à laquelle elle est reliée par un réseau de conduites (6).

La cuve de matériau fusible formant réservoir (2) comporte dans ses parois latérales des résistances chauffantes (7). Le déplacement du matériau fusible est assuré par un réservoir d'air élastique (8).

On comprendra que, le matériau fusible étant à l'état liquide, la mise sous pression du réservoir (8) entraîne son augmentation de volume et chasse donc le matériau fusible au travers des conduites (6) vers la réservation (5).

Dans la représentation de la figure 2, on a disposé sur le plateau (1) une plaque (9).

Le format de la plaque est légèrement supérieur à la surface utile de la réservation (5). La face supérieure du plateau étant parfaitement plane de fabrication, elle sert de référentiel de posage de la plaque ou pièce à usiner.

Dans l'étape représentée à la figure 3, un plateau supérieur escamotable (10), monté sur une rotule (11), assure le contact de la plaque sur le référentiel de posage (la surface supérieure du plateau) pendant l'opération de collage de ladite plaque.

La figure 4 illustre la phase opérationnelle de fonctionnement de l'étau.

On applique sur le plateau (10) une force représentée par la flèche F.

On applique dans le réservoir une pression d'air représentée par une flèche f. On comprendra que F doit être supérieure à la force opposée créée par f.

Le matériau fusible est porté à sa phase « liquide » par l'intermédiaire des résistances chauffantes. En gonflant le réservoir élastique, le matériau fusible remplit la poche sous la plaque. Tout en maintenant la pression dans le réservoir élastique, le matériau fusible est refroidi, la pression dans le réservoir élastique est coupée et le plateau supérieur est escamoté afin de permettre l'usinage.

Il peut être prévu des évents sur le plateau (1) servant de témoins de remplissage de la cavité (5).

A la figure 5 on a illustré l'usinage d'une plaque (9) déterminant après usinage la strate proprement dite (12).

L'usinage est réalisé par la mise en oeuvre, par exemple, du procédé de stratoconception.

La strate est maintenue uniformément. La fraise a la possibilité d'usiner dans le matériau thermofusible sans dommage pour palier soit à un mauvais réglage en hauteur, soit au problème de bavure laissée par le rayon de bout d'outil.

Pour libérer la strate, le matériau thermofusible est porté à sa phase « liquide » ; l'excédent sur la strate est supprimé par application d'un solvant.

On a représenté des volumes (13,13') évidés par fraisage et transformés en copeaux.

Dans la variante de mise en oeuvre de la figure 6, le plateau supérieur (10) est muni d'un circuit de refroidissement (14).

Le processus opératoire peut alors être le suivant.

Le plateau supérieur vient à nouveau en appui sur la plaque usinée. Il est équipé d'un circuit de refroidissement. En procédant au chauffage du matériau thermofusible, celui-ci, sous l'effet de l'augmentation de volume du réservoir élastique, remplit le volume laissé par l'enlèvement des copeaux.

En jouant sur le gradient de température, on peut reconstituer la plaque: le plateau supérieur refroidit rapidement le volume de matière occupant l'espace des copeaux enlevés. La plaque est à ce stade constituée de deux matériaux. Il y a alors deux alternatives :
- soit le plateau supérieur est recouvert d'un film anti-adhérence (PTFE, par exemple) et il suffit de retirer la plaque pour la retourner manuellement,
- soit la plaque est liée par le matériau thermofusible au plateau supérieur qui s'escamote et devient le nouveau plateau d'usinage.

De très nombreuses variantes peuvent être apportées sans sortir du cadre de l'invention. On notera également les remarques générales suivantes :
- le principe consiste à utiliser un matériau plastique de tout type dont la caractéristique est d'être thermofusible, lui permettant de passer, en fonction de sa température, d'un état liquide à l'état solide et inversement plusieurs fois ;
- le plateau pourra être métallique ou en matériau plastique ;
- on pourra prévoir de disposer dans la réservation (5) des surfaces d'appui secondaires permettant de servir de plots de référence et de garantir une meilleure répartition et une meilleure planéité de l'appui ; les plots appartiennent également au référentiel de posagé constitué par la face supérieure du plateau ;
- la matière thermofusible sera choisie de manière telle qu'elle évite toute intervention chimique avec la plaque à fixer ;
- la matière thermofusible et ses déchets pourront être, si besoin, ôtés facilement de la surface par tout procédé adéquat tel que diluant, solvant, procédé mécanique, ceci non limitativement ;
- les canalisations de refroidissement pourront également être utilisées en cas de besoin en tant que canalisations de chauffage ;
- selon une variante de mise en oeuvre simplifiée, l'alimentation en matière plastique peut être effectuée directement par le dessus, sans le dispositif d'injection du réservoir (2). Dans ce cas, un léger surplus de matériau fusible est nécessaire. Il s'évacuera par des évents latéraux lors de la mise en position, qui peut être manuelle, de la pièce (9). Le système de refroidissement-chauffage de la cavité (5) reste identique.

## Revendications

1. Structure d'étau pour le maintien de pièces devant subir une opération de microfraisage dans le cadre d'un procédé de prototypage rapide, ladite structure comportant essentiellement :
- une cuve (2) de matériau thermofusible pouvant être amené de manière réversible de l'état liquide à l'état solide,
- un circuit de refroidissement (3)
- un réseau de résistances chauffantes (4)
**caractérisée en ce qu'**elle consiste en un plateau de fixation (1) muni de réservations adéquatement réparties dans lesquelles est disposé le matériau thermofusible dont la surface libre peut venir en continuité de la surface dudit plateau, celui-ci comportant des moyens de réchauffage/refroidissement (3,4) dudit matériau thermofusible permettant de libérer/bloquer la pièce disposée sur ledit plateau, et **en ce qu'**elle comporte :
- une réservation supérieure ouverte (5) destinée à recevoir du matériau fusible en provenance de la cuve (2) à laquelle elle est reliée par un réseau de conduites (6), ladite cuve comportant dans ses parois latérales des structures chauffantes (7).

2. Structure d'étau selon la revendication 1, **caractérisée en ce que** le déplacement du matériau fusible est assuré par un réservoir d'air élastique (8).

3. Structure d'étau selon l'une quelconque des revendications 1 et 2, **caractérisée en ce qu'**elle comporte une plaque (9) disposée sur le plateau (1), de format légèrement supérieur à la surface utile de la réservation (5).

4. Structure d'étau selon la revendication 3, **caractérisée en ce qu'**un plateau supérieur escamotable (10) monté sur une rotule (11) assure le contact de la plaque sur le référentiel de posage pendant l'opération de collage de la plaque.

5. Structure d'étau selon la revendication 4, **caractérisée en ce que** le plateau (10) est muni d'un circuit de refroidissement (14).

## Patentansprüche

1. Haltevorrichtung zum Halten von Teilen zwecks Ausführung einer Mikrofräsarbeit im Rahmen eines Verfahrens zum schnellen Prototypenbau, die im Wesentlichen aufweist:
einen Behälter (2) mit schmelzbarem Material, das reversibel vom flüssigen Zustand in den festen Zustand überführt werden kann;
einen Kühlungskreis (3);
ein Heizwiderstandsnetz (4);
**dadurch gekennzeichnet, dass** die Haltevorrichtung aus einer Halteplatte (1) besteht, die mit gleichmäßig verteilten Kammern ausgestattet ist, in denen das schmelzbare Material angeordnet ist, dessen freie Fläche auf die Oberfläche der genannten Halteplatte gelangen kann, die Mittel (3, 4) zum Erwärmen/Abkühlen des genannten schmelzbaren Materials aufweist, die ein Freigeben/Festhalten des auf der genannten Halteplatte angeordneten Teiles ermöglichen, wobei die Schraubstockvorrichtung eine obere offene Kammer (5) aufweist, der das schmelzbare Material aus dem Behälter (2) aufnimmt, an den er mittels eines Leitungsnetzes (6) angeschlossen ist, und wobei der Behälter in seinen Seitenwänden Heizmittel (7) aufweist.

2. Haltevorrichtung nach Anspruch 1, **dadurch gekennzeichnet, dass** die Verdrängung des schmelzbaren Materials mittels eines elastischen Luftbehälters (8) erfolgt.

3. Haltevorrichtung nach einem der Ansprüche 1 oder 2, **dadurch gekennzeichnet, dass** sie eine Platte (9) aufweist, die auf der Halteplatte (1) angeordnet ist und die die nutzbare Oberfläche der Kammer (5) leicht übersteht.

4. Haltevorrichtung nach Anspruch 3, **dadurch gekennzeichnet, dass** eine obere einziehbare Halteplatte (10), die auf einem Kugelgelenk (11) befestigt ist, während des Verklebens der Platte den Kontakt der Platte auf dem Bezugssystem der Aufstellung sicherstellt.

5. Haltevorrichtung nach Anspruch 4, **dadurch gekennzeichnet, dass** die Halteplatte (10) mit einem Kühlungskreis (14) versehen ist.

## Claims

1. Vice structure for retaining parts which are to undergo an operation of micromilling within the framework of a method of rapid prototyping, said structure substantially comprising:
- a tank (2) of heat-fusible material which can be brought, in a reversible manner, from the liquid state into the solid state,
- a cooling circuit (3), and
- a network of heating resistances (4),
**characterised in that** said structure consists of a securing flange (1) provided with adequately distributed recesses, in which is disposed the heat-fusible material, the free surface of which material can become continuous with the surface of said flange, the latter comprising means (3, 4) for heating/cooling said heat-fusible material so as to permit the part disposed on said flange to be released/locked,
and **in that** it comprises
- an upper open recess (5) intended to accommodate fusible material arriving from the tank (2), to which said recess is connected by a network of conduits (6), said tank comprising heating structures (7) in its lateral walls.

2. Vice structure according to claim 1, **characterised in that** the displacement of the fusible material is ensured by a resilient air reservoir (8).

3. Vice structure according to any of claims 1 and 2, **characterised in that** it comprises a plate (9), which is slightly greater in size than the useful surface of the recess (5) and is disposed on the flange (1).

4. Vice structure according to claim 3, **characterised in that** a detachable upper flange (10), mounted on a ball-and-socket joint (11), ensures that the plate is in contact with the positioning reference during the operation to adhere the plate.

5. Vice structure according to claim 4, **characterised in that** the flange (10) is provided with a cooling circuit (14).
